# FASCICULE DE BREVET EUROPEEN

(11) **EP 1 152 617 B1**
(45) Date de publication et mention de la délivrance du brevet: **16.02.2005**
(21) Numéro de dépôt: 01401143.1
(22) Date de dépôt: 03.05.2001
(51) Int. Cl.: H04N 7/18, H04N 7/14, G05D 1/02

(54) **Procédé et dispositif interactifs de diffusion d'images émises par une caméra vidéo mobile**
Interaktives Verfahren und Vorrichtung für Bildrundfunk einer beweglichen Videokamera
Interactive method and apparatus for image broadcasting from a mobile video camera

(30) Priorité: 04.05.2000 FR 0005715
(43) Date de publication de la demande: 07.11.2001
(73) Titulaire: CENTRE NATIONAL D'ETUDES SPATIALES, F-75001 Paris (FR)
(72) Inventeur: Delail, Mario, 31450 Odars (FR)
(74) Mandataire: Colas, Jean-Pierre

(56) Documents cités:
- EP-A- 0 821 522
- WO-A-99/48276
- US-A- 4 799 267
- US-A- 5 525 883
- PATENT ABSTRACTS OF JAPAN vol. 2000, no. 07, 29 septembre 2000 (2000-09-29) & JP 2000 094373 A (TAKAHASHI KATSUNORI), 4 avril 2000 (2000-04-04)
- PATENT ABSTRACTS OF JAPAN vol. 2000, no. 06, 22 septembre 2000 (2000-09-22) & JP 2000 083245 A (CANON INC), 21 mars 2000 (2000-03-21)

## Description

La présente invention est relative à un procédé interactif de diffusion d'images émises par une caméra vidéo montée sur un robot mobile dans un espace prédéterminé et, plus particulièrement, à un tel procédé suivant lequel on commande à distance les déplacements dudit robot et de ladite caméra dans ledit espace, sur une trajectoire désirée. La présente invention est aussi relative à un dispositif pour la mise en oeuvre de ce procédé.

De nombreux sites "WEB" du réseau de communications Internet diffusent actuellement des images prises par des caméras vidéo, dites "webcams", agencées de manière à explorer des espaces prédéterminés depuis des points fixes ou mobiles de ces espaces. Les internautes connectés à ces sites ne disposent cependant pas de moyens permettant de commander à volonté les déplacements de la caméra dans l'espace considéré, aussi bien que l'orientation de l'axe de son objectif ou l'angle de champ de cet objectif. Or, une telle interactivité serait avantageuse dans des espaces tels qu'un musée, un local industriel à surveiller, un appartement à faire visiter, etc....

On expérimente actuellement des dispositifs conçus pour offrir cette interactivité. Ces dispositifs connus exploitent les images diffusées par la caméra pour localiser la position du robot et de la caméra dans l'espace et pour définir une trajectoire souhaitée de ceux-ci dans cet espace.

Le faible débit du réseau Internet empêche cependant que les images vidéo transmises par la caméra présentent une résolution et une fréquence de rafraîchissement suffisamment élevées pour que la localisation et le guidage du robot supportant la caméra puissent être obtenus avec une précision satisfaisante.

La présente invention a donc pour but de fournir un procédé interactif de diffusion d'images émises par une caméra vidéo, et transmises via le réseau Internet, qui ne présente pas ces inconvénients.

On atteint ce but de invention, ainsi que d'autres qui apparaîtront à la lecture de la description qui va suivre avec un procédé interactif de diffusion d'images émises par une caméra vidéo montée sur un robot mobile dans un espace prédéterminé, suivant lequel on commande à distance les déplacements du robot et de la caméra dans cet espace, sur une trajectoire désirée, ce procédé étant remarquable en ce qu'on définit la trajectoire, à partir d'un site distant, à l'aide d'une cartographie de l'espace et en ce qu'on asservit, à partir d'un poste de commande en communication avec ledit site distant, la trajectoire réelle du robot, repérée dans ladite cartographie, à ladite trajectoire désirée.

Comme on le verra plus loin, l'utilisation d'une cartographie pour guider les déplacements du robot, à travers un site WEB du réseau Internet, permet de réduire considérablement le débit, sur ce réseau, des informations nécessaires, ce débit étant alors rendu compatible avec la capacité de ce réseau, au bénéfice de la précision du guidage obtenu.

Suivant d'autres caractéristiques du procédé selon la présente invention, on asservit la trajectoire du robot par la méthode de la poursuite de la position d'un modèle du robot. On simule le déplacement du modèle sur une trajectoire théorique obtenue par correction de la trajectoire désirée, pour la rendre compatible avec les caractéristiques géométriques et dynamiques du robot. On mesure en continu l'écart entre la position du robot sur sa trajectoire et la position du modèle du robot sur la trajectoire théorique, et on tire de cet écart des commandes en vitesse et en direction dudit robot, propres à réduire ledit écart.

L'invention fournit aussi un dispositif pour la mise en oeuvre de ce procédé, ce dispositif comprenant une caméra vidéo montée sur un robot mobile dans un espace prédéterminé, et des moyens de commande à distance des déplacements du robot et de la caméra dans cet espace, ce dispositif étant remarquable en ce que lesdits moyens de commande comprennent des moyens chargés d'une cartographie dudit espace et des moyens pour définir, à partir d'un site distant, dans ladite cartographie, une trajectoire désirée de déplacement dudit robot, et un poste de commande, en communication avec ledit site distant, pour asservir la trajectoire réelle suivie par le robot à la trajectoire désirée.

D'autres caractéristiques et avantages du procédé et du dispositif suivant l'invention apparaîtront à la lecture de la description qui va suivre et à l'examen du dessin annexé dans lesquels :
- la figure 1 est une représentation schématique d'un dispositif pour la mise en oeuvre du procédé suivant la présente invention,
- la figure 2 est un diagramme des échanges d'information intervenant entre divers éléments du dispositif de la figure 1, et
- la figure 3 est un organigramme du séquencement des échanges d'informations entre un site WEB formant partie du dispositif de la figure 1, hébergeant une application mettant en oeuvre le procédé selon la présente invention, et un utilisateur de ce site.

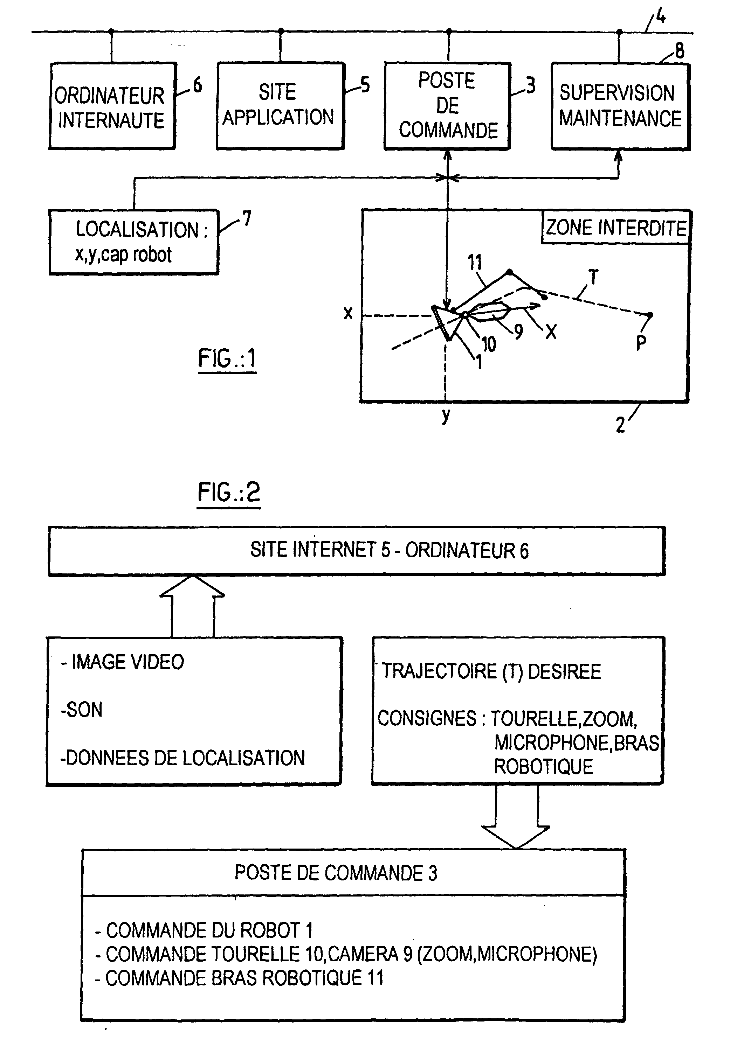

On se réfère à la figure 1 du dessin annexé où il apparaît que le dispositif suivant la présente invention comprend essentiellement un robot 1 mobile dans un espace 2 prédéterminé, sous la commande d'un poste de commande 3 connecté, par l'intermédiaire d'un réseau de communications 4 tel que, par exemple, le réseau Internet, à un site WEB 5 hébergeant une "application" mettant en oeuvre le procédé selon la présente invention. Ce site est évidemment accessible à tout internaute, par exemple au moyen d'un ordinateur personnel 6 connecté, par l'intermédiaire d'un fournisseur d'accès, au réseau Internet 4.

Le dispositif représenté comprend encore des moyens de localisation 7 du robot 1 dans l'espace 2 et, éventuellement, des moyens 8 de supervision et de maintenance du dispositif, utilisés lors de la mise au point du dispositif puis, après la mise en service de ce dernier, pour des opérations de maintenance. Ces moyens 8 comprennent les mêmes fonctions que l'application hébergée dans le site 5. Ils sont placés de préférence près de l'espace 2, pendant la mise au point, puis sur le réseau Internet pour la maintenance.

Le robot 1 est équipé de moyens (non représentés) permettant de le déplacer physiquement selon deux ou trois dimensions de l'espace 2 (roues, moteurs, etc...) et de moyens de support d'une caméra vidéo 9. Avantageusement, ces moyens de support 10 permettent d'orienter l'axe X de l'objectif de la caméra 9 dans toute direction utile de l'espace 2, selon deux ou trois dimensions de cet espace. De tels moyens 10 peuvent être constitués, à titre d'exemple illustratif et non limitatif, par une tourelle ou un bras motorisé. Dans des applications de maintenance d'installations industrielles le robot 1 peut en outre supporter un bras robotique 11 permettant de réaliser les manipulations d'objets se trouvant dans le champ de la caméra 9. Enfin un microphone (non représenté) peut être associé à la caméra 9 pour la prise d'un son lié aux images diffusées.

Le robot 1 porte aussi divers équipements électroniques de commande de ses déplacements et de ceux des organes ou appareils montés sur lui, et un système de communications avec le poste de commande 3.

Cette architecture permet de déporter les asservissements et les traitements d'information décrits plus loin, vers des calculateurs non embarqués sur le robot, ce qui simplifie ce dernier au bénéfice de son coût.

Les moyens 7 de localisation du robot 1 dans l'espace 2 permettent, selon une caractéristique de la présente invention, de repérer la position du robot par ses coordonnées (x, y, éventuellement z) dans une cartographie de cet espace. Lors des déplacements du robot 1 ces moyens 7 peuvent en outre délivrer une information représentative du cap du robot, utile pour asservir la trajectoire réelle suivie par le robot à une trajectoire de consigne, comme on le verra plus loin.

Ces moyens de localisation, connectés au poste de commande 3, peuvent être constitués, de manière connue, par des moyens vidéo, des moyens utilisant un système GPS, des moyens odométriques, des moyens de triangulation, etc, etc...

On se réfère maintenant au diagramme de la figure 2 pour décrire les échanges d'informations qui sont organisés entre le poste de commande 3 et le robot 1 d'une part, et entre le poste de commande et l'ensemble constitué par le site 5 de l'application suivant la présente invention et l'ordinateur personnel 6 d'un internaute connecté à ce site, d'autre part.

Les informations envoyées par l'ensemble 5, 6 au poste 3 sont :
- la trajectoire T désirée du robot, choisie par l'internaute,
- des consignes pour la commande de la tourelle 10 supportant la caméra vidéo 9 et de l'angle de champ de son objectif, quand celui-ci est à focale variable (zoom), le cas échéant,
- des consignes pour la commande d'un bras robotique 11 supporté par le robot 1, le cas échéant.

Les informations envoyées par le poste de commande à l'ensemble 5, 6 sont :
- les données de localisation du robot, tirés des moyens 7,
- les images saisies par la caméra,
- éventuellement, le son saisi par le microphone de cette caméra.

Le poste de commande 3 exploite les informations qu'il reçoit pour les convertir en commandes des déplacements du robot 1, en commandes des mouvements de la tourelle 10 et de l'objectif zoom de la caméra 9, et en commandes du bras robotique 11 éventuellement monté sur le robot 1.

Suivant la présente invention, le poste de commande assure le suivi par le robot 1 d'une trajectoire désirée, définie dans une cartographie de l'espace 2, en asservissant la trajectoire réelle du robot dans cet espace cartographié à cette trajectoire désirée.

Cette trajectoire T est choisie par l'internaute sur des "pages" de l'application hébergée par le site 5, faisant apparaître le plan de l'espace cartographié et la position du robot 1 dans cet espace.

Pour ce faire il est nécessaire de réaliser un modèle numérique de l'espace 2. Un relevé topographique permet de "pixeliser" cet espace et un traitement informatique des caractéristiques photométriques des pixels saisis (densité optique, couleurs) permet d'obtenir ce modèle numérique. Ces techniques de pixelisation et de traitement informatique sont classiques et n'exigent donc pas une description plus complète dans la présente demande de brevet.

Le modèle numérique de la "carte" de l'espace est complété par l'indication d'éventuelles zones interdites au robot pour diverses raisons tenant, par exemple, à l'impossibilité pour les moyens mécaniques de déplacement du robot, de pénétrer dans une zone particulière de l'espace, et par d'autres indications, telles que :
- dans une application de vente immobilière : le nom et les dimensions des différentes pièces d'un appartement,
- dans une application de visite d'un musée : le nom des différentes salles d'expositions et des objets exposés,
- dans une application de maintenance d'un atelier industriel : le nom des différentes zones de travail de l'atelier, etc...

Le modèle numérique de la carte représentant l'espace 2 est chargé dans les différentes interfaces homme/machine du dispositif suivant l'invention, locales ou distantes, et donc dans le poste de commande 3 et dans l'application hébergée dans le site Internet 5.

Ce chargement de carte préalable supprime les transferts d'images saisies par la caméra utilisés dans le passé pour localiser et guider le robot. Ces transferts s'opérant par l'intermédiaire du réseau Internet, à débit limité, la résolution et la fréquence des images transférées étaient aussi nécessairement limitées, au préjudice de la précision de la localisation et du guidage du robot.

Suivant la présente invention, à partir de la position de départ du robot sur la carte, affichée sur l'écran de l'ordinateur 6, et d'un point P (voir figure 1) choisi par l'internaute comme destination pour le robot, une trajectoire T est assignée au robot pour rejoindre ce point P. Cette trajectoire est appelée dans la suite trajectoire "désirée" ou trajectoire "objectif".

Le dispositif selon la présente invention comprend des moyens permettant d'asservir la trajectoire réellement suivie par le robot, lorsqu'il se déplace pour rejoindre le point P, à la trajectoire "objectif".

Pour ce faire des moyens logiciels sont prévus, par exemple dans le poste de commande 3, pour examiner la compatibilité des caractéristiques de la trajectoire objectif avec les possibilités de manoeuvre du robot, et corriger d'éventuelles incompatibilités tenant, par exemple, à la taille des différents segments de la trajectoire, aux angles entre segments, à la présence de zones interdites. La trajectoire corrigée prend alors la forme d'une trajectoire théorique curviligne compatible avec les caractéristiques géométriques et dynamiques (accélération/décélération) du robot. D'autres moyens logiciels, installés de préférence dans le poste de commande 3, permettent alors, suivant la présente invention, d'asservir la trajectoire réelle du robot 1 à cette trajectoire théorique, par la méthode de la poursuite.

Selon cette méthode, on modélise le robot et on simule un déplacement du modèle obtenu sur la trajectoire théorique à l'aide d'une loi de commande proportionnelle de ce déplacement, affectée de coefficients déterminées par une caractérisation du robot, cette loi de commande pouvant avantageusement tenir compte des réactions du modèle en mode de fonctionnement dynamique (accélération/décélération).

D'autres moyens logiciels permettent de calculer en continu l'écart, dans un repère lié à l'espace 2, entre la position calculée du modèle et la position réelle du robot 1, connue par les moyens 7 de localisation.

Cet écart permet de calculer les commandes en vitesse et en cap, ou direction, du robot pour que sa position se rapproche de celle de son modèle. Les signaux de commande utilisés peuvent avantageusement faire l'objet d'une correction dynamique du type PI (proportionnelle/intégrale) dont les coefficients sont eux aussi tirés d'une caractérisation du robot.

On asservit ainsi la trajectoire réelle du robot à la trajectoire désirée, par l'intermédiaire de la trajectoire théorique assignée au modèle du robot.

A cet asservissement sur trajectoire, on peut ajouter un asservissement en vitesse classique du robot, pris en charge par des moyens avantageusement incorporés au robot lui-même.

L'asservissement décrit ci-dessus, dont les moyens de mise en oeuvre sont largement transférés sur le poste de contrôle et sur le robot lui-même, grâce à l'utilisation d'une cartographie numérisée de l'espace dans lequel ce robot est susceptible de se déplacer, permet de guider le robot avec une grande précision sur une trajectoire prédéterminée désirée et ceci moyennant des transmissions d'informations à débit limité, compatibles avec les capacités du réseau Internet, ceci conformément au but poursuivi par la présente invention.

Quand le robot et la caméra, ainsi guidés, arrivent au point P extrême de la trajectoire désirée T, des moyens logiciels permettent à l'internaute de commander la tourelle 10 pour pointer l'axe X de l'objectif de la caméra vers une zone particulière choisie de l'espace 2 et, éventuellement, de commander l'angle de champ de cet objectif, voire l'ouverture de son diaphragme, de manière à recevoir sur l'écran de son ordinateur 6 une image de cette zone, de bonne qualité.

L'internaute peut alors actionner un bras robotique éventuel pour agir sur des objets placés dans cette zone, par l'intermédiaire de commandes appropriées du poste de commande 3.

D'une manière générale, les possibilités d'action et d'exploration de l'internaute sont définies par l'application hébergée dans le site 5. Ces possibilités sont très variées. A titre d'exemples illustratifs et non limitatifs, le site peut ainsi proposer :
- la diffusion d'images vidéo et, éventuellement, du son, en continu, à un rythme compatible avec le débit du réseau Internet (par exemple pour la visite d'un appartement à louer ou à vendre),
- la diffusion d'images (et éventuellement du son) à des endroits prédéterminés (par exemple pour l'inspection ou l'entretien d'un appareil disposé dans un espace éloigné),
- la diffusion d'images vidéo à la demande, prises depuis des points de vues choisis à l'avance par l'internaute (visite de musées, d'expositions, etc...).

Les images obtenues peuvent être enregistrées en vue d'un examen hors ligne.

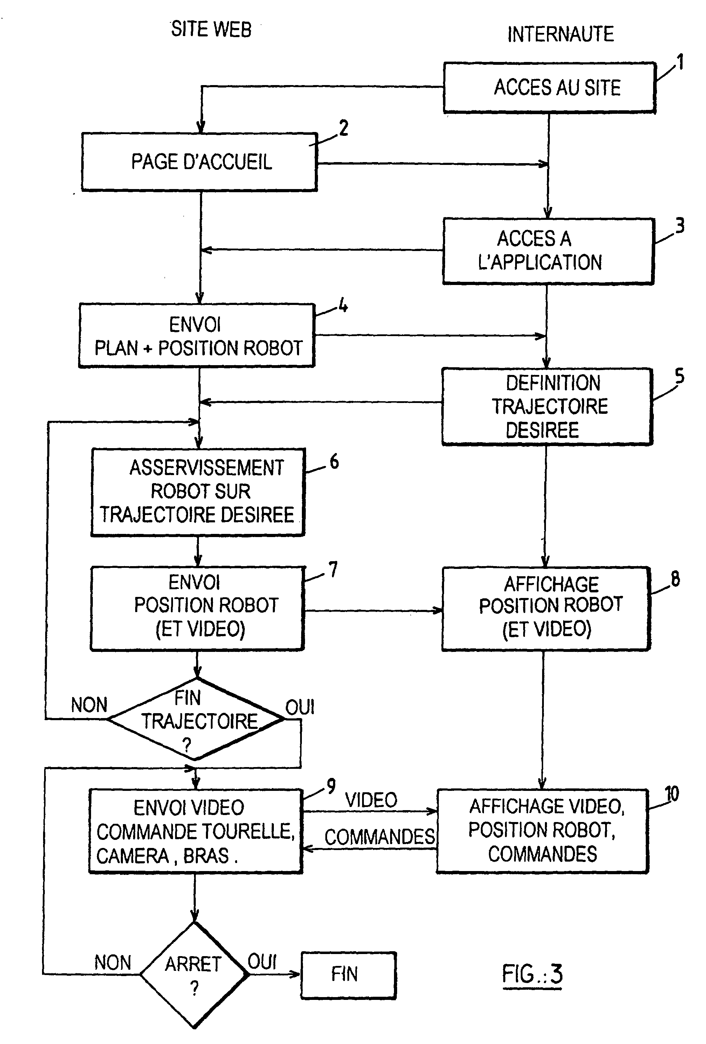

On se réfère maintenant à l'organigramme de la figure 3 du dessin annexé, pour décrire le séquencement des échanges d'informations entre le site 5 du dispositif suivant l'invention et l'ordinateur 6 d'un internaute connecté à ce site.

L'internaute ayant connecté l'ordinateur 6 au site 5 (étape 1), celui-ci renvoie sur l'écran de cet ordinateur une page d'accueil (étape 2) permettant de choisir un accès (étape 3) à l'application mettant en oeuvre le procédé suivant l'invention. L'écran de l'ordinateur 6 affiche alors le plan de l'espace 2 à explorer et la position de départ du robot 1 dans cet espace (étape 4). Des commandes affichées sur l'écran permettent à l'internaute de définir une trajectoire désirée pour le robot dans cet espace (étape 5). Le poste de commande 3 assure alors l'asservissement des déplacements du robot (étape 6) de manière que celui-ci suive au plus près la trajectoire désirée, et envoie au site 5 la position courante du robot (étape 7) ainsi éventuellement que les images courantes alors vues par la caméra, pour affichage sur l'écran de l'ordinateur 6 (étape 8).

Quand le robot 1 s'immobilise au point extrême P de sa trajectoire, l'internaute fait usage des commandes mises à sa disposition (étape 9) par l'application pour pointer la caméra 9 dans toute direction particulière de l'espace choisie par lui et commande la caméra elle-même de manière à obtenir les images souhaitées. Il peut également commander (étape 9) un bras robotique 11 éventuellement monté sur ce robot. L'écran de l'ordinateur 6 affiche alors la position du robot dans l'espace, les images saisies par la caméra 9 et différentes commandes disponibles (étape 10). Grâce à celles-ci, les étapes 9 et 10 peuvent se répéter jusqu'à ce que l'internaute décide d'arrêter sa connexion au site ou de changer le point de vue de la caméra.

## Revendications

1. Procédé interactif de diffusion d'images émises par une caméra vidéo (9) montée sur un robot (1) mobile dans un espace (2) prédéterminé, procédé suivant lequel on commande à distance les déplacements dudit robot (1) et de ladite caméra (9) dans ledit espace (2), sur une trajectoire (T) désirée,
- **caractérisé en ce qu'**on définit ladite trajectoire (T), à partir d'un site distant (5, 6), à l'aide d'une cartographie dudit espace (2) et **en ce qu'**on asservit, à partir d'un poste de commande (3) en communication avec ledit site distant (5, 6), la trajectoire réelle dudit robot (1), repérée dans ladite cartographie, à ladite trajectoire désirée (T).

2. Procédé conforme à la revendication 1, **caractérisé en ce qu'**on utilise un site WEB (5) du réseau Internet (4) pour définir ladite trajectoire désirée (T) et pour diffuser les informations saisies par ladite caméra (9).

3. Procédé conforme à la revendication 2, **caractérisé en ce qu'**on asservit ladite trajectoire (T) par la méthode de la poursuite de la position d'un modèle dudit robot (1).

4. Procédé conforme à la revendication 3, **caractérisé en ce qu'**on simule le déplacement dudit modèle sur une trajectoire théorique obtenue par correction de ladite trajectoire désirée (T), pour la rendre compatible avec les caractéristiques géométriques et dynamiques dudit robot (1).

5. Procédé conforme à la revendication 4, **caractérisé en ce qu'**on mesure en continu l'écart entre la position du robot (1) sur sa trajectoire et la position du modèle dudit robot (1) sur ladite trajectoire théorique, et **en ce qu'**on tire de cet écart des commandes en vitesse et en cap dudit robot, propres à réduire ledit écart.

6. Procédé conforme à l'une quelconque des revendications 1 à 5, **caractérisé en ce que** ladite cartographie est obtenue par pixelisation et numérisation d'une image dudit espace.

7. Dispositif pour la mise en oeuvre du procédé conforme à l'une quelconque des revendications 1 à 6, comprenant une caméra vidéo (9), montée sur un robot (1) mobile dans un espace (2) prédéterminé, et des moyens de commande à distance des déplacements dudit robot (1) et de ladite caméra (9) dans ledit espace (2), **caractérisé en ce que** lesdits moyens de commande (3, 5, 6) comprennent des moyens (3, 5) chargés d'une cartographie dudit espace et des moyens (6) pour définir, à partir d'un site distant, dans ladite cartographie, une trajectoire (T) désirée de déplacement dudit robot (1), et un poste de commande (3), en communication avec ledit site distant, pour asservir la trajectoire réelle suivie par ledit robot (1) à ladite trajectoire (T).

8. Dispositif conforme à la revendication 7, **caractérisé en ce que** lesdits moyens de commande (3, 5, 6) comprennent un poste de commande (3) dudit robot (1) et de ladite caméra (9), ledit poste (3) étant connecté, par l'intermédiaire du réseau Internet (4) à un site WEB (5) hébergeant une application accessible à un utilisateur d'un ordinateur (6) connecté lui-même au réseau (4), pour la commande par ledit utilisateur des mouvements du robot (1) et de la caméra (9).

9. Dispositif conforme à la revendication 8, **caractérisé en ce qu'**il comprend des moyens de localisation (7) dudit robot (1) dans ledit espace (2), lesdits moyens de localisation (7) étant connectés audit poste de commande (3).

10. Dispositif conforme à la revendication 8, **caractérisé en ce que** lesdits moyens de commande (3, 5, 6) comprennent des moyens (10) pour commander la position de la caméra (9) sur le robot (1).

11. Dispositif conforme à la revendication 10, **caractérisé en ce que** lesdits moyens de commande (3, 5, 6) comprennent en outre des moyens pour commander au moins un des organes de la caméra vidéo (9) faisant partie du groupe constitué par : un objectif à focale variable, le diaphragme dudit objectif, un microphone.

12. Dispositif conforme à l'une quelconque des revendications 8 à 11, **caractérisé en ce qu'**il comprend un bras robotique (11) monté sur le robot (1) pour réaliser des manipulations dans le champ de prise de vue de la caméra (9), lesdits moyens de commande (3, 5, 6) comprenant des moyens de commande dudit bras (11).

13. Dispositif conforme à l'une quelconque des revendications 8 à 12, **caractérisé en ce qu'**il comprend des moyens (8) de supervision et de maintenance, connectés audit réseau Internet.

## Claims

1. Interactive method of broadcasting images issuing from a video camera (9) mounted on a robot (1) that can move in a predetermined space (2), according to which method the movements of the said robot (1) and of the said camera (9) in the said space (2), over a desired trajectory (T), are controlled remotely,
- **characterized in that** the said trajectory (T) is defined from a remote site (5, 6), with the help of a map of the said space (2) and **in that** the actual trajectory of the said robot (1), charted in the said map, is slaved, from a control station (3) in communication with the said remote site (5, 6), to the said desired trajectory (T).

2. Method in accordance with Claim 1, **characterized in that** a website (5) of the Internet network (4) is used to define the said desired trajectory (T) and to broadcast the information captured by the said camera (9).

3. Method in accordance with Claim 2, **characterized in that** the said trajectory (T) is slaved by the process of tracking the position of a model of the said robot (1).

4. Method in accordance with Claim 3, **characterized in that** the movement of the said model over a theoretical trajectory obtained by correcting the said desired trajectory (T) is simulated so as to make it compatible with the geometric and dynamic characteristics of the said robot (1).

5. Method in accordance with Claim 4, **characterized in that** the deviation between the position of the robot (1) on its trajectory and the position of the model of the said robot (1) on the said theoretical trajectory is measured continuously, and **in that** speed and heading commands for the said robot, suitable for reducing the said deviation, are derived from this deviation.

6. Method in accordance with any one of Claims 1 to 5, **characterized in that** the said map is obtained by pixelization and digitization of an image of the said space.

7. Apparatus for the implementation of the method in accordance with any one of Claims 1 to 6, comprising a video camera (9), mounted on a robot (1) that can move in a predetermined space (2), and means of remote control of the movements of the said robot (1) and of the said camera (9) in the said space (2), **characterized in that** the said means of control (3, 5, 6) comprise means (3, 5) loaded with a map of the said space and means (6) for defining, from a remote site, in the said map, a desired trajectory (T) of movement of the said robot (1), and a control station (3), in communication with the said remote site, for slaving the actual trajectory followed by the said robot (1) to the said trajectory (T).

8. Apparatus in accordance with Claim 7, **characterized in that** the said means of control (3, 5, 6) comprise a control station (3) for the said robot (1) and the said camera (9), the said station (3) being connected, by way of the Internet network (4), to a website (5) hosting an application accessible to a user of a computer (6) itself connected to the network (4), for the control by the said user of the displacements of the robot (1) and of the camera (9).

9. Apparatus in accordance with Claim 8, **characterized in that** it comprises means of location (7) of the said robot (1) in the said space (2), the said means of location (7) being connected to the said control station (3).

10. Apparatus in accordance with Claim 8, **characterized in that** the said means of control (3, 5, 6) comprise means (10) for controlling the position of the camera (9) on the robot (1).

11. Apparatus in accordance with Claim 10, **characterized in that** the said means of control (3, 5, 6) furthermore comprise means for controlling at least one of the members of the video camera (9) forming part of the group consisting of: a variable focal length objective, the diaphragm of the said objective, a microphone.

12. Apparatus in accordance with any one of Claims 8 to 11, **characterized in that** it comprises a robot arm (11) mounted on the robot (1) for effecting manipulations in the picture taking field of the camera (9), the said means of control (3, 5, 6) comprising means of control of the said arm (11).

13. Apparatus in accordance with any one of Claims 8 to 12, **characterized in that** it comprises supervision and maintenance means (8), connected to the said Internet network.

## Patentansprüche

1. Interaktives Verfahren zum Senden von Bildern, die von einer Videokamera (9) ausgesandt werden, welche auf einem in einem vorbestimmten Raum (2) bewegbaren Roboter (1) angebracht ist, wobei gemäß dem Verfahren die Bewegungen des Roboters (1) und der Kamera (9) in dem Raum (2) auf einer gewünschten Bahn (T) ferngesteuert werden,
**dadurch gekennzeichnet, daß** die Bahn (T) von einem entfernten Ort (5, 6) aus mittels einer Karte des Raums (2) definiert wird, und daß von einem in Verbindung mit dem entfernten Ort (5, 6) stehenden Steuerpult (3) aus die in der Karte aufgefundene reale Bahn des Roboters (1) auf die gewünschte Bahn (T) gesteuert wird.

2. Verfahren nach Anspruch 1, **dadurch gekennzeichnet, daß** eine Web-Site (5) des Internets (4) zum Definieren der gewünschten Bahn (T) und zum Senden der von der Kamera (9) aufgenommenen Informationen verwendet wird.

3. Verfahren nach Anspruch 2, **dadurch gekennzeichnet, daß** die Steuerung auf die Bahn (T) durch das Verfahren des Verfolgens der Position eines Modells des Roboters (1) erfolgt.

4. Verfahren nach Anspruch 3, **dadurch gekennzeichnet, daß** die Bewegung des Modells auf einer theoretischen Bahn simuliert wird, die durch Korrigieren der gewünschten Bahn (T) erhalten wird, um sie mit den geometrischen und dynamischen Eigenschaften des Roboters (1) kompatibel zu machen.

5. Verfahren nach Anspruch 4, **dadurch gekennzeichnet, daß** der Abstand zwischen der Position des Roboters (1) auf seiner Bahn und der Position des Modells des Roboters (1) auf der theoretischen Bahn kontinuierlich gemessen wird, und daß aus diesem Abstand die Geschwindigkeits- und Kursbefehle für den Roboter gewonnen werden, um den Abstand zu verringern.

6. Verfahren nach einem der Ansprüche 1 bis 5, **dadurch gekennzeichnet, daß** die Karte durch Pixelisation und Digitalisierung eines Bildes des Raumes erhalten wird.

7. Vorrichtung zur Durchführung des Verfahrens nach einem der Ansprüche 1 bis 6, mit einer Videokamera (9), die auf einem in einem vorbestimmten Raum (2) bewegbaren Roboter (1) angebracht ist, und Einrichtungen zum Fernsteuern der Bewegungen des Roboters (1) und der Kamera (9) in dem Raum (2), **dadurch gekennzeichnet, daß** die Steuereinrichtungen (3, 5, 6) Einrichtungen (3, 5), die mit einer Karte des Raums (2) versehen sind, und Einrichtungen (6), die ausgehend von einem entfernten Ort in der Karte eine gewünschte Bahn (T) der Verschiebung des Roboters (1) definieren, und ein in Verbindung mit dem entfernten Ort stehendes Steuerpult (3) umfassen, um die von dem Roboter (1) verfolgte reale Bahn auf die Bahn (T) zu steuern.

8. Vorrichtung nach Anspruch 7, **dadurch gekennzeichnet, daß** die Steuereinrichtungen (3, 5, 6) ein Steuerpult (3) für den Roboter (1) und die Kamera (9) umfassen, wobei das Pult (3) über das Internet (4) mit einer Web-Site (5) verbunden ist, die eine Anwendung beinhaltet, welche für einen Benutzer eines Rechners (6), der ebenfalls mit dem Netz (4) verbunden ist, zur Steuerung der Bewegungen des Roboters (1) und der Kamera (9) durch den Benutzer zugänglich ist.

9. Vorrichtung nach Anspruch 8, **dadurch gekennzeichnet, daß** sie Einrichtungen zum Lokalisieren (7) des Roboters (1) in dem Raum (2) aufweist, wobei die Einrichtungen zum Lokalisieren (7) mit dem Steuerpult (3) verbunden sind.

10. Vorrichtung nach Anspruch 8, **dadurch gekennzeichnet, daß** die Steuereinrichtungen (3, 5, 6) Einrichtungen (10) zum Steuern der Position der Kamera (9) auf dem Roboter (1) umfassen.

11. Vorrichtung nach Anspruch 10, **dadurch gekennzeichnet, daß** die Steuereinrichtungen (3, 5, 6) ferner Einrichtungen zum Steuern zumindest eines der Elemente der Videokamera (9) umfassen, welche Bestandteile der Gruppe sind, die besteht aus: einem Objektiv mit variablem Fokus, der Blende dieses Objektivs, einem Mikrophon.

12. Vorrichtung nach einem der Ansprüche 8 bis 11, **dadurch gekennzeichnet, daß** sie einen Roboterarm (11) aufweist, der an dem Roboter (1) angebracht ist, um Handgriffe innerhalb des Sichtfeldes der Kamera (9) durchzuführen, wobei die Steuereinrichtungen (3, 5, 6) Einrichtungen zum Steuern des Armes (11) aufweisen.

13. Vorrichtung nach einem der Ansprüche 8 bis 12, **dadurch gekennzeichnet, daß** sie mit dem Internet verbundene Überwachungs- und Wartungseinrichtungen (8) aufweist.
